# EUROPEAN PATENT SPECIFICATION

(11) **EP 3 887 136 B1**
(45) Date of publication and mention of the grant of the patent: **04.05.2022**
(21) Application number: 19831885.9
(22) Date of filing: 27.11.2019
(51) Int. Cl.: C04B 41/00, C04B 41/45, B29C 39/10

(54) **IMPROVED METHOD OF RESIN-REINFORCEMENT OF A STONE BLOCK**
VEREINFACHTES VERFAHREN ZUR HARZARMIERUNG EINES STEINBLOCKS
PROCÉDÉ AMÉLIORÉ DE RENFORCEMENT PAR RÉSINE D'UN BLOC DE PIERRE

(30) Priority: 27.11.2018 IT 201800010616
(43) Date of publication of application: 06.10.2021
(73) Proprietor: Girasole Pietre Naturali S.r.l., 37015 Sant'Ambrogio di Valpolicella (VR) (IT)
(72) Inventor: ZANTEDESCHI, Pierangelo, 37015 Sant'Ambrogio di Valpolicella (VR) (IT)
(74) Representative: Maroscia, Antonio
(86) International application number: PCT/IB2019/060213
(87) International publication number: WO 2020/110018

(56) References cited:
- EP-A1- 0 962 430
- EP-A1- 1 229 007
- EP-A1- 3 162 782
- WO-A1-2005/077645
- WO-A1-2007/052319
- WO-A1-2007/054995
- CN-B- 103 737 727

## Description

### Technical Field

The present invention generally finds application in the field of stone working, i.e. working on stone materials such as marble, granite, onyx and the like, and particularly relates to an improved method of resin-reinforcement of a block of one of these materials, having cracks and/or surface defects at different depths.

### Background Art

In the field of stone working, quarry blocks are known to exhibit a large and increasing amount of natural stone defects, namely surface or internal cracks of various depths, possibly having a "heart" shape, due to the poor availability of quarrying sites and the environmental and social obstacles to protection.

In view of obviating this serious drawback, resin-reinforcement methods have been long known for consolidating the blocks and making them ready for subsequent cutting into slabs, without exposing them to fracture or crumbling.

Furthermore, defective blocks have always caused a safety issue in the working cycle to convert them into slabs and in slab working processes.

Generally, resin-reinforcement methods include a step of providing a wooden formwork for forming a container enclosing the block and a step of impregnating the block by pouring a curing resin into the formwork to fill the gaps with the block.

Typically, the resin is mixed with catalysts to accelerate curing once it has penetrated the defects.

Furthermore, the method includes a step of introducing the block enclosed in the formwork into a hermetically sealed environment, such as an autoclave, whose pressure is decreased and/or increased from atmospheric pressure to urge the fluid resin into the cracks or defects before resin curing. EP 0 962 430 A1 and EP 1 229 007 A1 relate to methods of resin-reinforcement for stone material blocks using spacer elements and sheets or panels surrounding a block.

A first drawback of this prior art method is that the provision of a formwork entails heavy labor and material requirements and a resulting increase of repair costs.

A further drawback is that the outer surface of the block often has an irregular shape, whereby a gap having a considerable volume and a variable thickness is formed between the inner walls of the formwork and the outer surface of the block.

Since this gap must be entirely filled to ensure that the defects or cracks of the block will be filled up, the use of a formwork entails the consumption of large amounts of resin, much larger than those strictly required for block repair.

A further drawback is that this method requires plants with dedicated workstations to ensure optimized implementation.

In an attempt to at least partially obviate these drawbacks, methods for resin-reinforcement of stone slabs have been developed, which use flexible materials conforming with the irregular shape of the block.

EP 3 162 782 A1 and CN 103 737 727 B relate to resin-reinforcement methods for stone material blocks. Drainage layers are applied between the vacuum sheet or bag materials and the stone material. Drainage layers are also used in WO 2007/054995 A1 and WO 2007/052319 A1. W02005/077645 also discloses a method of resin-reinforcement of marble blocks which includes applying a drainage layer to at least the side walls of the block and a later step of introducing the block into a bag formed from a sheet of flexible waterproof material.

The bag is connected to a vacuum pump and has connectors for a resin to be injected by a mixing and injection apparatus. Then, vacuum is maintained in the bag until the resin is fully cured.

One drawback of this known method consists in that the application of the drainage layer on the walls of the structural element is a time-consuming and laborious operation, which requires considerable labor, with a corresponding increase of process costs.

Furthermore, once the resin has cured, the flexible sheet may adhere on the drainage layer thereby preventing its removal at the end of the process and before cutting the block into slabs. The plastic sheet that adheres to the drainage layer must be necessarily removed before sawing to avoid problems during sawing and any damage to the cutting machine.

### Technical Problem

In view of the state of the art, the technical problem addressed by the present invention is to provide a simpler and more effective method of resin-reinforcement of blocks, while reducing process times and the amount of resin to be used.

### Disclosure of the invention

The object of the present invention is to obviate the above drawback, by providing an improved method of resin-reinforcement of a stone material that is highly efficient and relatively cost-effective.

A particular object of the present invention is to provide a method as described hereinbefore that can be easily implemented and reduces the overall amount of resin to be used in the process.

A further object of the present invention is to reduce the steps of the resin-reinforcement method, by avoiding the application of drainage or intermediate layers.

Another object of the present invention is to provide a method as described hereinbefore that can consolidate blocks irrespective of their shape and size.

Yet another object of the present invention is to provide a method as described hereinbefore that can consolidate a block having both defects at the surface and in depth and irrespective of the type of defects.

These and other objects, as more clearly explained hereinafter, are fulfilled by an improved method of resin-reinforcement of a block of a stone material, such as marble, granite, onyx, having cracks and/or shallow or deep defects, as defined in claim 1.

In a preferred embodiment, the method comprises the steps of:
a) laying a sheet of flexible waterproof plastic material on a base resting on the ground and placing a block to be resin-reinforced on the sheet;
b) applying a plurality of spacer members to one or more walls of the block;
c) attaching a plurality of panels of rigid sheet material on the walls of the block with the spacer members interposed, to leave a gap between the panels and the walls of the block,
d) folding the sheet on the walls of the block covered with the panels, to form a container,
e) hermetically sealing the container;
f) applying at least one first connector to the outer surface of the container and connecting it to a vacuum pump via first pipes to create a negative pressure in the container;
g) applying at least one second connector, distinct from the first connector, and extending through the panels, to the container and
h) introducing a resin in the liquid or pasty state into the container via second pipes connected to the container through the second connector, to fill the gap.

Finally, the following steps will be carried out:
i) maintaining the vacuum in the container for a predetermined time to allow the resin to penetrate the gap and the cracks and/or defects until the resin is at least partially cured and
j) disconnecting the first and second pipes from the container and removing the resin-reinforced block from the container.

With this succession of steps, resin-reinforcement may be carried out in a simple manner, and the overall amount of resin to be used in the method may be reduced.

Advantageously, the panels are made of a rigid sheet material selected from wood, plywood, polyethylene, or an equivalent synthetic material.

Advantageous embodiments of the invention are obtained in accordance with the dependent claims.

### Brief description of the drawings

Further features and advantages of the invention will be more apparent from the detailed description of a preferred, non-exclusive embodiment of an improved method of resin-reinforcement of a stone block according to the invention, which is described as a non-limiting example with the help of the annexed drawings, in which:
FIG. 1 shows a block diagram of the resin-reinforcement method of the invention;
FIG. 2 is a perspective view of first and second steps of the inventive method;
FIG. 3 is a schematic perspective view of a third step of the inventive method;
FIGS. 4, 5 and 6 are a perspective view, a side view and a schematic perspective view respectively of additional steps of the inventive method;
FIG. 7 is a schematic top view of Fig. 6.

### Detailed description of a preferred exemplary embodiment

Particularly referring to the above figures, there is shown an improved method of resin-reinforcement of a block 1 of a stone material, such as marble, granite, onyx and the like having surface cracks D and/or defects at various depths.

As used hereinafter, the term "resin-reinforcement" is intended to designate the process for applying a resin layer on the surface of a block or an article made of stone material to fill the surface defects by coating, injection or a layer of resin to penetrate its surface defects by coating, injection or suction, in order to consolidate the base material before any further handling and cutting into slabs.

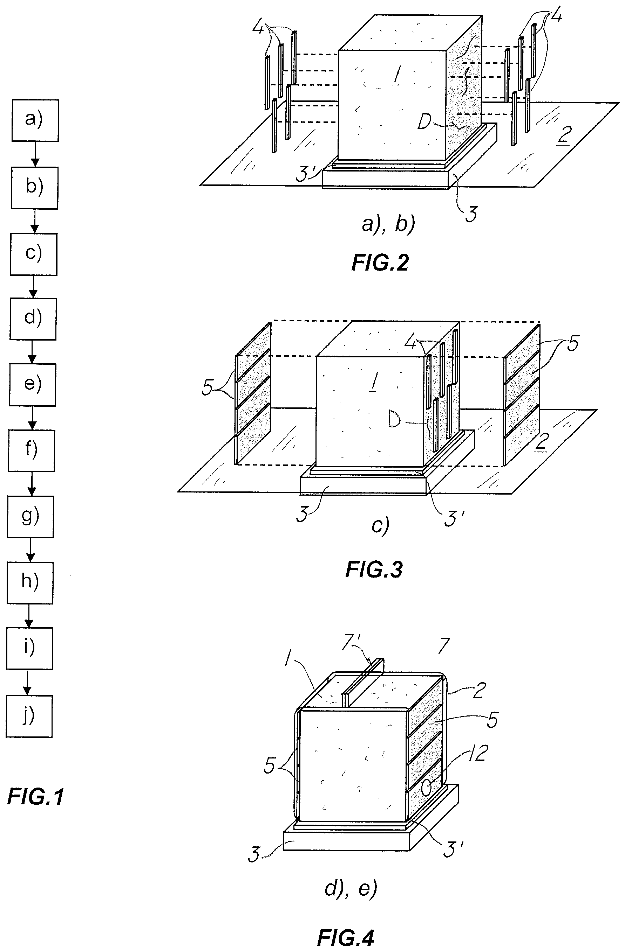

In a preferred embodiment of the invention, as shown in FIG. 2, the method comprises a step of a) laying a sheet 2 of flexible waterproof plastic material on a base 3 resting on the ground and placing a block 1 to be resin-reinforced on the sheet 2.

The plastic material of the sheet 2 may preferably be transparent and selected from the group of plastic materials including, as a non-limiting example, nylon, polyethylene, silicone or silicone-backed fabric. The base 3 may comprise a suitably reinforced wooden pallet or a rotating metal support adapted to facilitate the subsequent steps of the method.

Conveniently, the block 1 may be previously washed, dried and possibly pre-heated before the step of a) placing the block 1 on the sheet of plastic material 2.

Preferably, the sheet 2 may be placed on the base 3 with the interposition of a cushion layer 3' made of a soft material, adapted to protect the sheet 2 from cuts and ruptures.

Such cushion layer 3' may comprise a fabric of predetermined thickness, made of fibers of natural or synthetic material, possibly associated with suitable spacers to support the weight of the block 1.

As shown IN FIG. 2, the method includes a step b) of applying a plurality of spacer members 4 to one or more of the walls of the block 1.

As used hereinafter, the term "spacer" shall be intended to designate any member adapted to be applied to a surface to prevent a sheet or sheet element that lies on such surface from entirely adhering to the surface.

Advantageously, the spacer member 4 may be strips of wood, plastic, iron or linear shims made of rigid or partially rigid material.

Preferably, each member 4 may have a thin and elongated strip shape or a substantially elongate shape with a cross section selected from the group comprising squares, rectangles or circles.

Of course, each member 4 may have a short and squat shape or other irregular shapes other from those described above.

Furthermore, the above described shapes are only given by way of example and may be suitably changed according to the types of defects D in the block 1 and the desired consolidation level, without departure from the scope of the present invention.

In a first embodiment of the invention, as shown in FIG. 2, the spacer members 4 may be only applied to the block 1 at the areas with the defects D, to avoid unnecessary operations on the non-defective parts.

In a second embodiment of the invention, the plurality of spacer members 4 may be applied in a regular pattern on the side walls of the block 1 to be resin-reinforced, to efficiently facilitate repair of the block 1 and impart resistance thereto during cutting.

For this purpose, the step b) of applying the plurality of members 4 may be carried out by gluing the spacer members 4 with silicone or another equivalent adhesive.

In a peculiar aspect of the invention, the method includes a step of c) attaching a plurality of panels 5 of rigid sheet material on the walls of the block 1 with the spacer members 4 interposed, to leave a gap 6 between the panels 5 and the walls of the block 1 , as shown in FIG. 3.

Advantageously, the panels 5 may be made of a rigid sheet material selected from wood, plywood, polyethylene, or an equivalent synthetic material.

Conveniently, the panels 5 may be attached to the walls of the block 1 by means of a plurality of annular straps, made of silicone or another equivalent adhesive.

Optionally, an additional step may be provided, i.e. preparing a layer of fibrous material, not shown, e.g. made of a non-woven fabric and placing it on top of the panels 5 or between the spacer members 4 and the panels 5 or in another position not in contact with the walls of the block 1.

As shown in FIG. 4, the method comprises a step of d) folding the sheet 2 on the walls of the block 1 covered with the panels 5, to form a container 7 and a step of e) hermetically sealing the container 7.

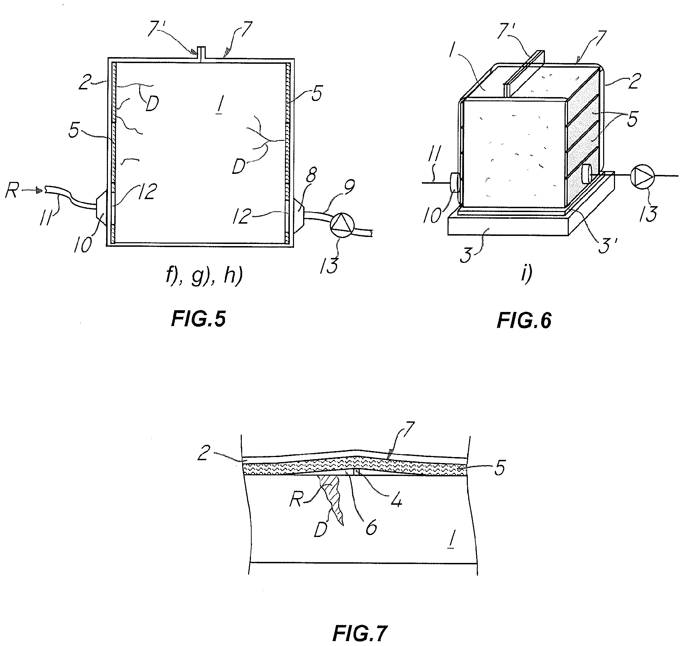

Then, a step carried out of f) applying at least one first connector 8 to the outer surface of the container 7 and connecting it to a vacuum pump 13 via first pipes 9 to create a negative pressure in the container 7, as shown in FIG. 5.

As is known per se, the step of f) creating vacuum in the container 7 may be obtained by means of a pump or an autoclave 13, adapted to extract the air in the container 7 and in the defects D of the block 1, to thereby provide a negative pressure ranging from -0.9 bar to -2 bar, preferably of -0.5 bar, in the container 7.

As shown in FIGS. 1 and 5, the method further comprises a step of g) applying at least one second connector 10, distinct from the first connector 8 and extending through the panels 5, to the container 7 and a step of h) introducing a resin R in the liquid or pasty state into the container 7 via second pipes 11 connected to the container 7 through the second connector 10 to fill the gap 6.

As is known per se, the resin R may be selected from the group comprising epoxy, polyurethane, polyester, thermoplastic and water resins or a combination thereof.

This step of h) introducing the resin R may be carried out by connecting the second pipes 11 to a suitably sized container, containing the resin R mixed with a catalyst of a known type.

As shown in FIG. 5, the resin R mixed with the catalyst may be urged into the gap 6 due to the vacuum created by the vacuum pump 13.

Advantageously, the first 8 and second junctions 10 may be placed at passage holes 12 formed on the panels 5 for extraction of air from the gap 6 via the first pipes 9 and the passage of resin R from the second pipes 11 to the gap 6.

In a preferred embodiment, the flexible waterproof sheet 2 may be made of silicone or silicone-backed fabric to facilitate reuse thereof for other stone blocks 1.

In this embodiment, the sheet 2 may be bag-shaped, possibly with a removable or zipper sealed cover 7' to form the container 7 in the sealing step e).

In this embodiment, the inner surface of the sheet 2 that contacts the block 1 to be resin-reinforced may be coated with a PTFE-based release paint to prevent the resin R from adhering to the sheet 2 so that the latter can be reused for resin-reinforcement of other stone blocks 1.

This embodiment can also avoid the use of the cushion layer 3' between the base 3 and the block 1 and allows the container 7 to be reused for resin-reinforcement of other blocks 1.

This is because silicone is a material with high non-stick properties and can be easily detached from the resin R, without leaving residues on the sheet 2.

Then, the block 1 in the container 7 undergoes a step of i) maintaining the vacuum in the container 7 for a predetermined time t to allow the resin R to penetrate the gap 6 and the cracks and/or defects D until the resin R is at least partially cured, as shown in FIG. 6.

The predetermined time t of the maintaining step i) may vary according to the material of the resin R, the type of catalyst and the shape and size of the block to be resin-reinforced 1.

By way of example, a vacuum maintaining time t of about 18 hours will be sufficient for resin-reinforcement of a marble block approximately having a cube shape of side 2.5m.

Finally, a step is provided of j) disconnecting the first 9 and second pipes 11 from the container 7 and removing the resin-reinforced block 1 from the container 7 for later processing of the block 1 in safe conditions.

Also, in addition to improving the aesthetic quality of the slabs obtained by cutting the resin-reinforced block, the panels 5 protect their edges during handling and/or transport, thereby avoiding chipping.

Of course, both placement of the block 1 on the base 3 in step a) and removal of the block 1 from the container 7 in step h) may be carried out by any lifting and transport means, for example a crane or a lift truck, not shown.

It will be appreciated that the particular combination of characteristics of the series of panels 5 and of the improved resin-reinforcement method of the invention can reduce the overall amount of resin R, and avoid the use of additional drainage layers, irrespective of the shape and size of the block to be resin-reinforced 1.

It will be apparent from the foregoing that the method of resin-reinforcement of a stone block fulfills the intended objects and can namely provide a simple and more effective resin-reinforcement of the blocks, in addition to reducing manufacturing times and the amount of resin in use.

### Industrial Applicability

The present invention may find application in industry, because it can be produced on an industrial scale in factories of the stone or stone-like working industry.

## Claims

1. An improved method of resin-reinforcement of a block (1) of stone material, having cracks (D) and/or shallow or deep defects, said method comprising the steps of:
a) laying a sheet (2) of flexible waterproof plastic material on a base (3) resting on the ground and placing a block (1) to be resin-reinforced on said sheet (2);
b) applying a plurality of spacer members (4) to one or more walls of the block (1);
c) attaching a plurality of panels (5) of rigid sheet material on the walls of the block (1) with said spacer members (4) interposed, to leave a gap (6) between the panels (5) and the walls of the block (1);
d) folding said sheet (2) on the walls of the block (1) covered with said panels (5), to form a container (7);
e) hermetically sealing said container (7);
f) applying at least one first connector (8) to the outer surface of said container (7) and connecting it to a vacuum pump (13) via first pipes (9) to create a negative pressure in said container (7);
g) applying at least one second connector (10), distinct from the first connector (8), and extending through said panels (5), to said container (7);
h) introducing a resin (R) in the liquid or pasty state into the container (7) via second pipes (11) connected to said container (7) through said second connector (10), to fill said gap (6);
i) maintaining the vacuum in the container (7) for a predetermined time (t) to allow the resin (R) to penetrate the gap (6) and the cracks and/or defects (D) until the resin (R) is at least partially cured;
j) disconnecting said first (9) and second (11) pipes from the container (7) and removing the resin-reinforced block (1) from said container (7).

2. Method as claimed in claim 1, **characterized in that** said spacer members (4) are strips of wood, plastic material, iron or linear shims made of a rigid or partially rigid material.

3. Method as claimed in claim 1, **characterized in that** said panels (5) are made of a rigid sheet material selected from wood, plywood, polyethylene, or an equivalent synthetic material.

4. Method as claimed in claim 1, **characterized in that** said resin (R) is selected from the group comprising epoxy, polyurethane, polyester resins or a combination thereof.

5. Method as claimed in claim 1, **characterized in that** said spacer members (4) are fixed to the outer surface of the block (1) with silicone or an equivalent adhesive.

6. Method as claimed in claim 1, **characterized in that** said panels (5) are secured to the side walls of the block (1) using a plurality of annular straps.

7. Method as claimed in claim 1, **characterized in that**, before being placed on said sheet of plastic material (2), the block (1) is washed, dried and possibly pre-heated.

8. Method as claimed in claim 1, **characterized in that** said sheet of plastic material (2) is placed on said base (3) with the interposition of a cushion layer (3') to prevent rupture of said sheet (2) during placement of the block (1).

9. Method as claimed in claim 1, **characterized in that** said sheet (2) of flexible waterproof plastic material is selected from the group comprising plastic polymers, nylon, polyethylene, silicone or silicone-backed fabric.

10. Method as claimed in claim 1, **characterized in that** said flexible waterproof sheet (2) is made of silicone or silicone-backed fabric to facilitate re-use thereof for resin-reinforcement of further blocks (1), said sheet (2) being bag-shaped with a removable or zipper sealed cover (7') to form said container (7).

## Patentansprüche

1. Verbessertes Verfahren zur Harzverstärkung eines Blocks (1) aus Steinmaterial mit Rissen (D) und/oder oberflächigen oder tiefen Defekten, wobei das Verfahren die folgenden Schritte umfasst:
a) Auflegen einer Folie (2) aus flexiblem, wasserfestem Kunststoffmaterial auf eine auf dem Boden ruhende Unterlage (3) und Anordnen eines mit Harz zu verstärkenden Blocks (1) auf der Folie (2);
b) Anbringen einer Vielzahl von Abstandselementen (4) an einer oder mehreren Wänden des Blocks (1);
c) Anbringen einer Vielzahl von Platten (5) aus starrem Plattenmaterial an den Wänden des Blocks (1), wobei die Abstandselemente (4) dazwischen angeordnet sind, um einen Zwischenraum (6) zwischen den Platten (5) und den Wänden des Blocks (1) zu lassen;
d) Falten der Folie (2) auf die mit den Platten (5) bedeckten Wände des Blocks (1), um einen Behälter (7) zu bilden;
e) hermetische Versiegelung des Behälters (7);
f) Anbringen mindestens eines ersten Verbindungsstücks (8) an der Außenfläche des Behälters (7) und Verbinden desselben mit einer Vakuumpumpe (13) über erste Rohre (9), um einen Unterdruck in dem Behälter (7) zu erzeugen;
g) Anbringen mindestens eines zweiten Verbindungsstücks (10), das sich von dem ersten Verbindungsstück (8) unterscheidet und sich durch die Platten (5) zu dem Behälter (7) erstreckt;
h) Einführen eines Harzes (R) in flüssigem oder pastösem Zustand in den Behälter (7) über zweite Rohre (11), die mit dem Behälter (7) durch das zweite Verbindungsstück (10) verbunden sind, um den Spalt (6) zu füllen;
i) Aufrechterhalten des Vakuums in dem Behälter (7) für eine vorbestimmte Zeit (t), um zu ermöglichen, dass das Harz (R) in den Spalt (6) und die Risse und/oder Defekte (D) eindringt, bis das Harz (R) zumindest teilweise gehärtet ist;
j) Trennen des ersten (9) und zweiten (11) Rohrs von dem Behälter (7) und Entfernen des harzverstärkten Blocks (1) aus dem Behälter (7).

2. Verfahren nach Anspruch 1, **dadurch gekennzeichnet, dass** die Abstandselemente (4) Streifen aus Holz, Kunststoffmaterial, Eisen oder lineare Abstandsstücke aus einem steifen oder teilweise steifen Material sind.

3. Verfahren nach Anspruch 1, **dadurch gekennzeichnet, dass** die Platten (5) aus einem starren Plattenmaterial hergestellt sind, das aus Holz, Sperrholz, Polyethylen oder einem gleichwertigen synthetischen Material ausgewählt ist.

4. Verfahren nach Anspruch 1, **dadurch gekennzeichnet, dass** das Harz (R) aus der Gruppe ausgewählt ist, die Epoxid-, Polyurethan-, Polyester-harze oder eine Kombination davon umfasst.

5. Verfahren nach Anspruch 1, **dadurch gekennzeichnet, dass** die Abstandselemente (4) mit Silikon oder einem gleichwertigen Klebstoff an der Außenfläche des Blocks (1) befestigt werden.

6. Verfahren nach Anspruch 1, **dadurch gekennzeichnet, dass** die Platten (5) an den Seitenwänden des Blocks (1) unter Verwendung einer Vielzahl von ringförmigen Bändern befestigt werden.

7. Verfahren nach Anspruch 1, **dadurch gekennzeichnet, daß** der Block (1) gewaschen, getrocknet und gegebenenfalls vorgewärmt wird, bevor er auf die Folie aus Kunststoffmaterial (2) gelegt wird.

8. Verfahren nach Anspruch 1, **dadurch gekennzeichnet, dass** die Folie aus Kunststoffmaterial (2) auf der Basis (3) unter Zwischenlage einer Polsterschicht (3') platziert wird, um ein Reißen der Folie (2) während der Platzierung des Blocks (1) zu verhindern.

9. Verfahren nach Anspruch 1, **dadurch gekennzeichnet, dass** die Folie (2) aus flexiblem, wasserdichtem Kunststoffmaterial aus der Gruppe ausgewählt ist, die Kunststoffpolymere, Nylon, Polyethylen, Silikon oder Gewebe mit Silikonrücken umfasst.

10. Verfahren nach Anspruch 1, **dadurch gekennzeichnet, dass** die flexible wasserdichte Folie (2) aus Silikon oder Gewebe mit Silikonrücken hergestellt ist, um ihre Wiederverwendung zur Harzverstärkung weiterer Blöcke (1) zu erleichtern, wobei die Folie (2) taschenförmig mit einer abnehmbaren oder mit einem Reißverschluss versiegelten Abdeckung (7') ist, um den Behälter (7) zu bilden.

## Revendications

1. Procédé amélioré de renforcement à la résine d'un bloc (1) de matériau en pierre, présentant des fissures (D) et/ou des défauts peu profonds ou profonds, ledit procédé comprenant les étapes de:
a) poser une feuille (2) de matière plastique souple étanche à l'eau sur un socle (3) reposant sur le sol et mise en place d'un bloc (1) à renforcer en résine sur ladite feuille (2);
b) appliquer une pluralité d'éléments d'espacement (4) sur une ou plusieurs parois du bloc (1);
c) fixer une pluralité de panneaux (5) de matériau en feuille rigide sur les parois du bloc (1) avec lesdits éléments d'espacement (4) interposés, pour laisser un espace (6) entre les panneaux (5) et les parois du bloc (1);
d) plier ladite feuille (2) sur les parois du bloc (1) recouvert desdits panneaux (5), pour former un conteneur (7);
e) sceller hermétiquement ledit conteneur (7);
f) appliquer au moins un premier connecteur (8) sur la surface externe dudit récipient (7) et le connecter à une pompe à vide (13) via des premiers tuyaux (9) pour créer une pression négative dans ledit conteneur (7);
g) appliquer au moins un second connecteur (10), distinct du premier connecteur (8), s'étendant à travers lesdits panneaux (5) audit conteneur (7);
h) introduire une résine (R) à l'état liquide ou pâteux dans le conteneur (7) via des seconds conduits (11) reliés audit conteneur (7) à travers ledit second connecteur (10), pour combler ledit interstice (6);
i) maintenir le vide dans le conteneur (7) pendant un temps prédéterminé (t) pour permettre à la résine (R) de pénétrer dans l'espace (6) et les fissures et/ou défauts (D) jusqu'à ce que la résine (R) soit au moins partiellement durcie;
j) déconnecter lesdits premier (9) et second (11) tuyaux du conteneur (7) et retirer le bloc renforcé de résine (1) dudit conteneur (7).

2. Procédé selon la revendication 1, **caractérisé en ce que** lesdits éléments d'espacement (4) sont des bandes de bois, de matière plastique, de fer ou des cales linéaires réalisées en un matériau rigide ou partiellement rigide.

3. Procédé selon la revendication 1, **caractérisé en ce que** lesdits panneaux (5) sont constitués d'un matériau en feuille rigide choisi parmi le bois, le contreplaqué, le polyéthylène ou un matériau synthétique équivalent.

4. Procédé selon la revendication 1, **caractérisé en ce que** ladite résine (R) est choisie dans le groupe comprenant les résines époxy, polyuréthane, polyester ou une combinaison de celles-ci.

5. Procédé selon la revendication 1, **caractérisé en ce que** lesdits éléments d'espacement (4) sont fixés à la surface externe du bloc (1) avec du silicone ou un adhésif équivalent.

6. Procédé selon la revendication 1, **caractérisé en ce que** lesdits panneaux (5) sont fixés aux parois latérales du bloc (1) à l'aide d'une pluralité de sangles annulaires.

7. Procédé selon la revendication 1, **caractérisé en ce que**, avant d'être placé sur ladite feuille de matière plastique (2), le bloc (1) est lavé, séché et éventuellement préchauffé.

8. Procédé selon la revendication 1, **caractérisé en ce que** ladite feuille de matière plastique (2) est placée sur ladite base (3) avec l'interposition d'une couche d'amortissement (3') pour empêcher la rupture de ladite feuille (2) lors de la mise en place du bloc (1).

9. Procédé selon la revendication 1, **caractérisé en ce que** ladite feuille (2) de matière plastique imperméable flexible est choisie dans le groupe comprenant des polymères plastiques, du nylon, du polyéthylène, du silicone ou un tissu doublé de silicone.

10. Procédé selon la revendication 1, **caractérisé en ce que** ladite feuille imperméable flexible (2) est faite de silicone ou de tissu doublé de silicone pour faciliter sa réutilisation pour le renforcement à la résine d'autres blocs (1), ladite feuille (2) étant un sac-façonné avec un couvercle amovible ou à fermeture éclair (7') pour former ledit conteneur (7).
